Europäisches Patentamt

European Patent Office

Office européen des brevets

(19)

(11) Publication number : **0 358 453 B1**

# (12) EUROPEAN PATENT SPECIFICATION

(45) Date of publication of patent specification :
07.06.95 Bulletin 95/23

(51) Int. Cl.⁶ : **H04N 9/78**

(21) Application number : **89308974.8**

(22) Date of filing : **05.09.89**

(54) **Digital luminance/chrominance separation apparatus.**

(30) Priority : **06.09.88 JP 223258/88**

(43) Date of publication of application :
**14.03.90 Bulletin 90/11**

(45) Publication of the grant of the patent :
**07.06.95 Bulletin 95/23**

(84) Designated Contracting States :
**DE FR GB**

(56) References cited :
EP-A- 0 173 439
FR-A- 2 513 463
IEEE TRANSACTIONS ON CONSUMER ELEC-
TRONICS. vol. CE-31, no. 3, August 1985,
NEWYORK US pages 240 - 253; TAKASHI OKA-
DA & AL.:'FLCKER-FREE NON INTERLACED
RECEIVING SYSTEM FOR STANDARD COLOR
TV SIGNALS'

(56) References cited :
IEEE TRANSACTIONS ON CONSUMER ELEC-
TRONICS. vol. CE-33, no. 3, August 1987,
NEWYORK US pages 91 - 96; NISHIGORI &
AL.:'A TWO DIMENSIONAL ADAPTIVE DIGI-
TAL DECODER FOR COLOR TELEVISION SIG-
NALS'
PATENT ABSTRACTS OF JAPAN vol. 12, no.
402 (E-673)(3249) 25 October 1988 & JP-A-63
141 490
PATENT ABSTRACTS OF JAPAN vol. 12, no.
85 (E-591)(2932) 17 March 1988 & JP-A-62 219
891

(73) Proprietor : **SONY CORPORATION**
**7-35 Kitashinagawa 6-chome**
**Shinagawa-ku**
**Tokyo 141 (JP)**

(72) Inventor : **Moriwake, Katsuakira Patents**
**Division Sony Corp.**
**6-7-35 Kitashinagawa**
**Shinagawa-ku**
**Tokyo 141 (JP)**

(74) Representative : **Thomas, Christopher Hugo et**
**al**
**D. Young & Co,**
**21 New Fetter Lane**
**London EC4A 1DA (GB)**

## Description

This invention relates to digital luminance/chrominance separation apparatus.

To separate luminance and chrominance signals from a composite video signal, a comb filter utilizing a frequency interleaved relationship of the signals has been used. In such a comb filter, correlation is used in relation to a signal delayed by a horizontal scanning line period. In consequence, colour smear undesirably appears in the vertical direction of a screen.

A form of luminance and chrominance signal separator which does not cause colour smear is a dynamic comb filter or a logical filter. For example, the following technique is disclosed in Japanese laid-open patent specification JP-A-61023492 (EP-A-0173439). A colour video signal is supplied to a vertical correlator to separate a luminance signal therefrom, and a chrominance signal is separated by a filter and a horizontal correlator arranged to receive an output from the vertical correlator. In addition, a luminance/chrominance (Y/C) separator using a non-linear vertical comb filter and a horizontal correlator which can be employed in embodiments of the present invention is disclosed in Japanese laid-open patent specification JP-A-64029187. This separator includes a vertical correlator, which samples three vertically aligned points on a screen to determine the vertical correlation of the lines, thus separating a chrominance signal.

In general, non-linear processing is performed in a separator using a correlator. Therefore, when digital processing using a sampling frequency three to four times a sub-carrier frequency is performed, harmonic distortion due to foldover occurs in a video band.

In particular, when a zone plate test chart serving as a test pattern for allowing visual observation of two-dimensional frequency characteristics of a processing system, or a sweep test chart in which a horizontal width of an image is continuously changed in a vertical direction is displayed, interference fringes (moiré) due to foldover appear conspicuously.

To eliminate these interference fringes, the sampling rate may be increased to effect over-sampling processing. Therefore, even if foldover noise is generated, the noise may fall outside the video band. However, this method is not very practicable, because it needs substantial circuitry and high operating speeds.

According to the present invention there is provided apparatus for separating a luminance and a chrominance signal from a digital composite video signal, the apparatus comprising:
filter means for extracting a chrominance signal including a high frequency component of a luminance signal;
a non-linear vertical comb filter to which three successive horizontal line signals of the chrominance signal are applied for generating a chrominance signal without colour smear;
a linear vertical comb filter to which the three successive horizontal line signals of the chrominance signal are applied for generating a chrominance signal without aliasing noise; and
a correlation detection circuit for detecting correlation between the three successive horizontal line signals and for controlling a selection of one of the outputs of said linear and non-linear vertical comb filters in response to the result of said detection;
said non-linear vertical comb filter being selectively used when the correlation does not exist, and said linear vertical comb filter being selectively used when the correlation exists.

According to the present invention there is also provided apparatus for separating a luminance and chrominance signal from a digital composite video signal, the apparatus comprising:
filter means for extracting a chrominance signal including a high frequency component of a luminance signal;
a non-linear horizontal filter to which an output signal of said filter means is applied for generating the chrominance signal without a cross-colour component;
a linear horizontal filter to which said output signal of said filter means is applied for generating the chrominance signal without aliasing noise;
a horizontal correlation detection circuit for detecting correlation between successive picture elements on one horizontal line of said digital composite video signal;
a switch means to which output signals of said non-linear and linear horizontal filters are applied for selectively extracting one thereof in response to an output signal of said horizontal correlation detection circuit;
a subtractor means for subtracting the output signal of said switch means from said digital composite video signal so as to obtain the luminance signal.

According to the present invention there is also provided apparatus for separating a chrominance and luminance signal from a digital composite video signal, the apparatus comprising:
extracting means for extracting a chrominance signal including a high frequency component of a luminance signal from the composite video signal;
producing means connected to said extracting means for producing successive horizontal line signals;
a non-linear vertical comb filter to which the successive horizontal line signals are applied for producing a chrominance signal without colour smear;
a linear vertical comb filter to which said successive horizontal line signals are applied for producing a chrominance signal without aliasing noise;
first detecting means connected to said extracting means for detecting correlation between the successive horizontal line signals;

first selecting means for selecting one of the output signals of said non-linear and linear vertical comb filters in response to an output signal of said first detecting means;

non-linear and linear horizontal filters connected to said first selecting means for producing chrominance signals having no cross-colour component and no aliasing noise;

second detecting means for detecting correlation between successive picture elements on one horizontal line signal of said composite video signal;

second selecting means for selecting one of the output signals of said non-linear and linear horizontal filters in response to an output signal of said second detecting means; and

means for subtracting an output signal of said second selecting means so that the luminance signal is separated from the composite video signal.

Embodiments of the present invention perform adaptive processing on the basis of the finding that foldover noise caused by non-linear processing is not so conspicuous when a change in image is large, but foldover noise is conspicuous when a change in image is small and smooth.

Thus, there is provided a luminance and chrominance signal separator comprising non-linear and linear vertical comb filters for separating luminance and chrominance components from a digital video input signal, and a vertical correlation detector for detecting the presence/absence of vertical correlation selectively to use the non-linear or linear vertical comb filters.

The luminance and chrominance signal separator may comprise non-linear and linear horizontal filters for separating high frequency luminance and chrominance components from a selected output of the non-linear and linear vertical comb filters, and a horizontal correlation detector for detecting the presence/absence of horizontal correlation selectively to use the non-linear or linear horizontal filters.

When vertical correlation does not exist, non-linear processing is performed to prevent colour smear at an edge of an image. When vertical correlation exists, linear processing is performed to reduce interference due to foldover noise.

When processing is performed by the non-linear and linear vertical comb filters, a cross-colour component leaks. However, the leaking component is separated and eliminated from chrominance components by the non-linear horizontal filter. This elimination is performed when horizontal correlation does not exist. When horizontal correlation exists, the linear horizontal filter is utilized to reduce foldover noise.

The invention will now be described by way of example with reference to the accompanying drawings, throughout which like parts are referred to by like references, and in which:

Figure 1 is a block diagram of a digital luminance and chrominance signal separator to which the present invention is applied;

Figure 2A shows an image sample and Figures 2B and 2C are waveform charts showing a separating operation of a linear vertical comb filter of Figure 1;

Figure 3 is a block diagram showing an arrangement of a non-linear vertical comb filter of Figure 1;

Figures 4A to 4C are waveform charts for explaining an operation of the circuit of Figure 3;

Figure 5A shows an image sample and Figures 5B and 5C are waveform charts for explaining an operation of the circuit of Figure 3;

Figures 6A to 6C and Figures 7A to 7C are waveform charts for explaining an operation of the circuit of Figure 3;

Figure 8 is a block diagram of a line correlation detector of Figure 1;

Figures 9 and 10A are flow charts showing an algorithm of determination of line correlation;

Figure 10B is a waveform chart of a sub-carrier on a horizontal line;

Figure 11 is a block diagram of a non-linear horizontal filter of Figure 1;

Figure 12 is a block diagram of a horizontal correlator of Figure 11;

Figures 13A to 13C are waveform charts showing an operation of the circuit of Figure 12;

Figure 14 is a block diagram of an edge compensator of Figure 11;

Figures 15A to 15C are waveform charts showing an operation of the circuit of Figure 14;

Figure 16A is a flow chart showing an algorithm of detection of correlation of a horizontal correlation detector of Figure 1;

Figure 16B is a view showing sampling points on the horizontal line; and

Figures 17A to 17C are waveform charts showing detection of horizontal correlation.

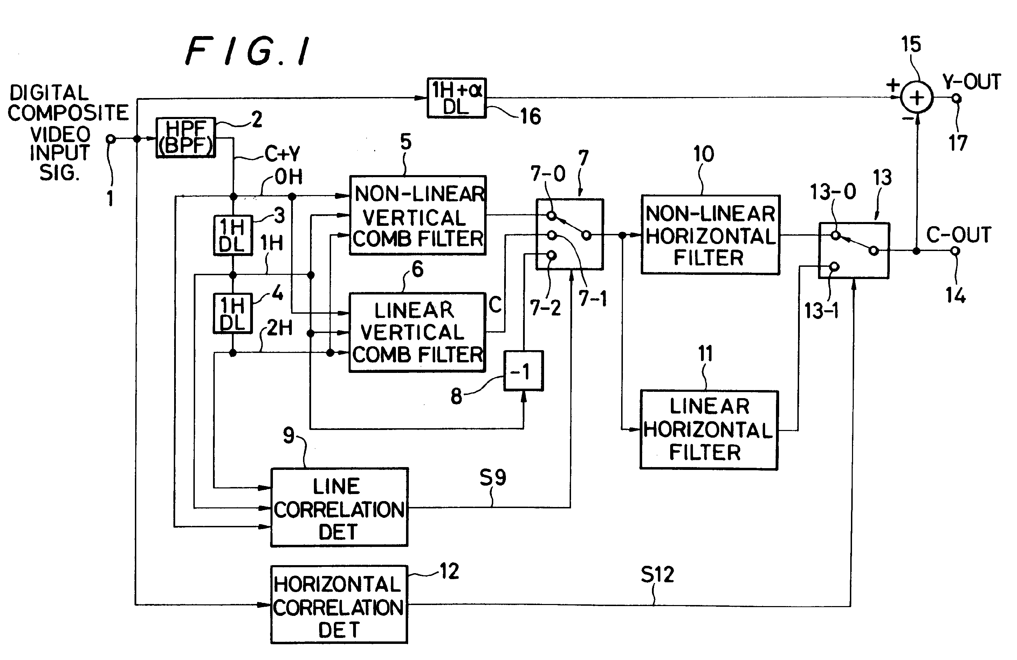

In the luminance and chrominance signal separator of Figure 1 a digital composite video input signal from an input terminal 1 is supplied to a high-pass filter (HPF) 2 or a band-pass filter (BPF) to extract chrominance components C. The extracted signal includes a high frequency luminance component y having a frequency higher than a subcarrier frequency of 3.58 MHz, as a remaining component.

An output (C + y) from the high-pass filter 2 is supplied to a serial circuit comprising two 1H (one horizontal line period) delay circuits 3 and 4. Video signals 0H, 1H, 2H corresponding to three successive lines are separately obtained in response to the input to and outputs from the serial circuit. Each of these three line signals is divided into two signals, and the divided signals are supplied to non-linear and linear vertical comb filters 5 and 6, respectively.

The comb filters 5 and 6 extract chrominance components C on the basis of vertical correlation of the signals. In order to utilize advantages and eliminate disadvantages (to be described later) of the vertical filters 5 and 6, they are selectively used in accordance with the conditions of the input video signal. More specifically, output signals from the vertical filters 5 and 6, and a current line signal 1h obtained through a polarity matching inverter 8 are selectively supplied by a switch 7. The switch 7 is switched in response to an output S9 (two bits) from a line (vertical) correlation detector 9 for detecting the presence/absence of line correlation based on the three line signals 0H, 1H and 2H.

An output from the switch 7 is divided into two signals which are then supplied to non-linear and linear horizontal filters 10 and 11. In the vertical filters 5 and 6, the high frequency luminance component having a sub-carrier frequency for causing colour noise on a screen is not eliminated. Therefore, the colour noise is eliminated by the horizontal filter 10.

In the non-linear processing performed by the horizontal filter 10, degradation of signals tends to be conspicuous when horizontal correlation (continuity) exists. For this reason, a horizontal correlation detector 12 detects the presence/absence of horizontal correlation of the input video signal to operate a switch 13 to select an output from the linear or non-linear horizontal filter 11 or 10.

A chrominance signal C obtained from an output from the switch 13 is supplied to an output terminal 14 and a subtractor 15. The subtractor 15 receives the input video signal through a $(1H + \alpha)$ timing control delay circuit 16. A luminance signal Y is supplied to an output terminal 17 by this subtraction.

Linear Vertical Comb Filter

The linear vertical comb filter 6 has a known arrangement. A luminance component of a given line (current line) is approximated using an arithmetic mean of two, that is, upper and lower lines with respect to the current line to eliminate the luminance component based on a difference between the approximated and current signals. In addition, the chrominance signals C having opposite phases every two adjacent lines are extracted. Since a digital signal is being processed, the linear vertical comb filter 6 is a digital signal processing filter. Therefore, in the linear vertical comb filter 6, the chrominance signal C free from its high frequency luminance component J can be obtained by the following equation:

$$C = (1/4)(1 - 2Z^{-H} + Z^{-2H}) \quad (1)$$

where $Z^{0H}(=1)$, $Z^{-H}$ and $Z^{-2H}$ are delayed signals corresponding to the signals 0H, 1H and 2H, respectively.

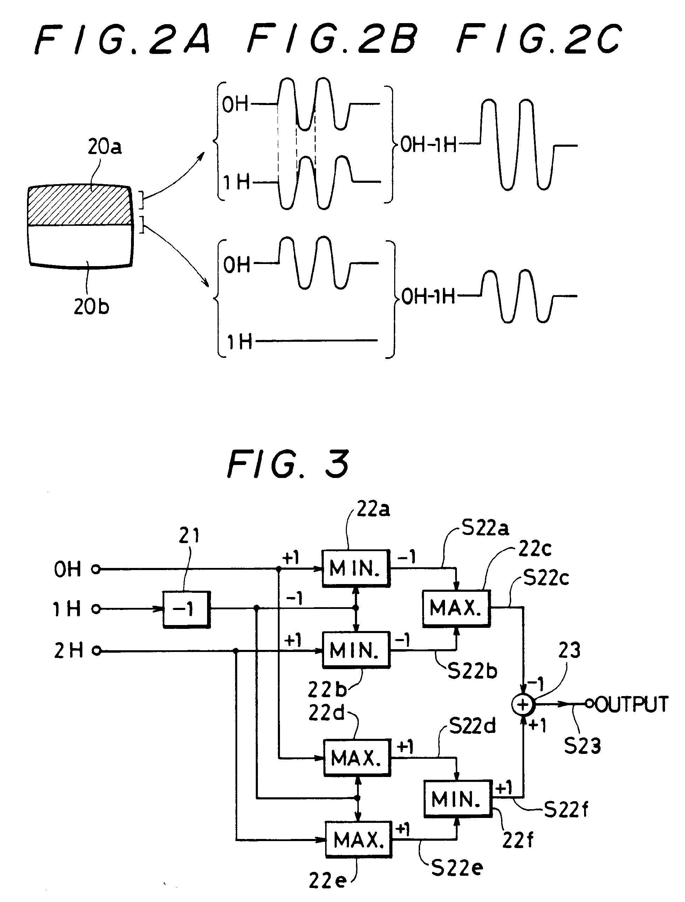

When the chrominance signal is separated by the linear vertical comb filter 6, at an edge between chromatic and achromatic portions 20a and 20b of an image shown in Figure 2A, colour smear is caused, that is, an achromatic line of an input signal (Figure 2B) is coloured, as shown in Figure 2C.

Non-Linear Vertical Comb Filter

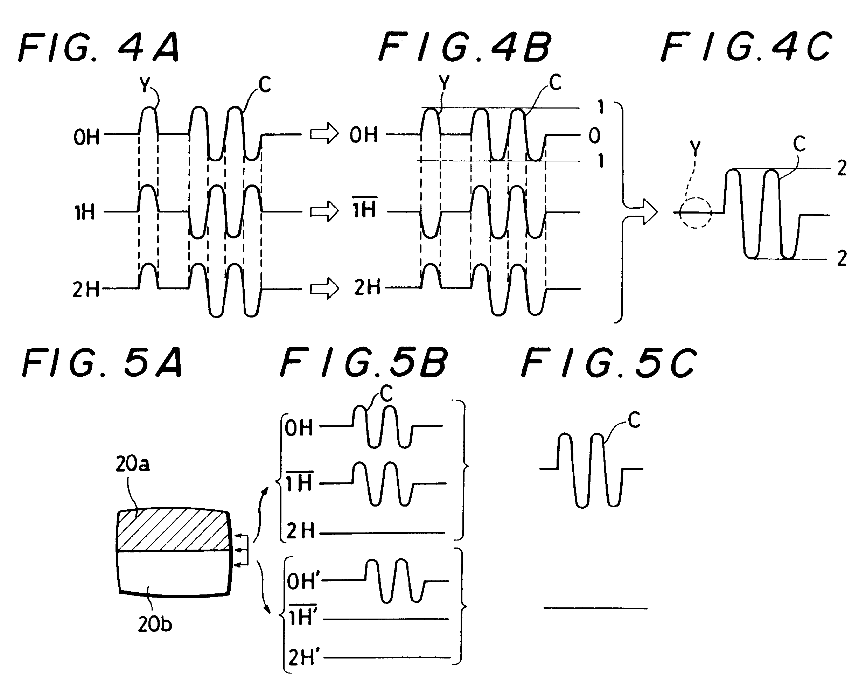

On the other hand, the non-linear comb filter 5 is formed by a vertical correlator shown in Figure 3, and is operated, as shown in Figures 4A to 7D. More specially, of the three input line signals 0H, 1H and 2H (Figure 4A), the central line signal 1H is inverted into a signal $\overline{1H}$ by an inverter 21. As shown in Figure 4B, the three line signals of the chrominance signal C are set in an in-phase state. The three line signals are processed by a logic circuit comprising minimum value circuits 22a, 22b and 22f, and maximum value circuits 22c, 22d and 22e. As shown in Figure 4C, a chrominance signal free from the luminance signal Y is extracted through an adder 23.

In such a non-linear comb filter 5 using the vertical correlator, at the edge between the chromatic and achromatic portions 20a and 20b of an image shown in Figure 5A, the chrominance signal is separated without causing colour smear of the achromatic line of the input signal (Figure 2B).

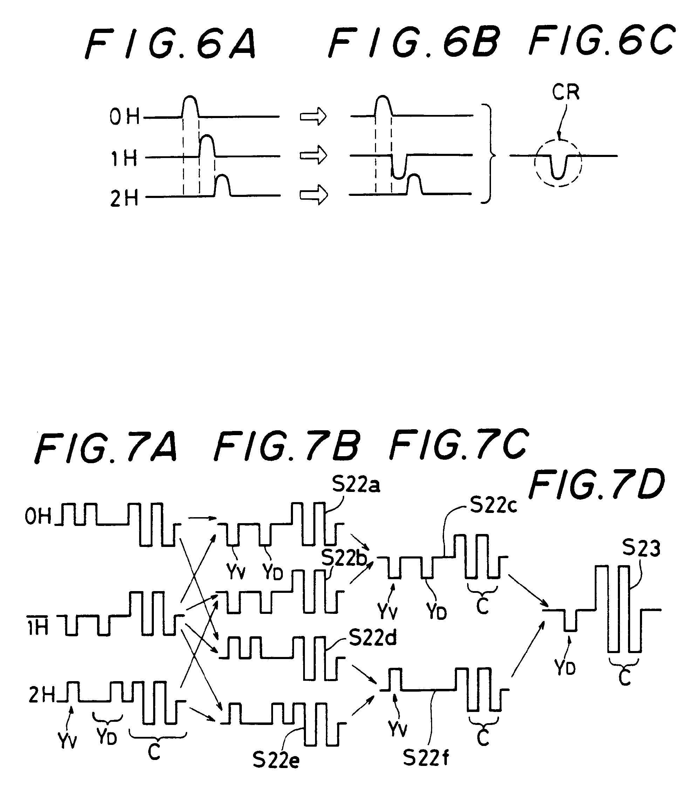

When a pattern (Figure 6A) is crossing the screen obliquely, however, the three non-correlated line signals shown in Figure 6B are processed. Therefore, a cross-colour signal CR shown in Figure 6C leaks.

An operation of the non-linear comb filter 5 of Figure 3 will now be described in detail with reference to Figures 7A to 7D. Three line signals having the same chrominance phases shown in Figure 7A are supplied to the minimum value circuits 22a and 22b, and their outputs S22a and S22b shown in Figure 7B are supplied to the maximum value circuit 22c. Therefore, as shown in Figure 7C, an output S22c including the in-phase chrominance signals C and a negative-polarity luminance signal Yv having vertical correlation can be obtained.

Similarly, the three line signals are supplied to the maximum value circuits 22d and 22e, and their outputs S22d and S22e shown in Figure 7B are supplied to the minimum value circuit 22f. Therefore, as shown in Figure 7C, an output S22f including the in-phase chrominance signals and the positive-polarity correlation luminance signal Yv is formed.

When these signals S22c and S22f are added by the adder 23, the chrominance signal C is left in an output S23 shown in Figure 7D, and the correlative luminance signal Yv is eliminated.

When a non-correlative luminance signal YD exists, however, the signal YD is mixed into the output S23 through each logic circuit.

Since this non-linear logical processing is performed in the non-linear comb filter 5, interference due to foldover noise is caused in digital signal processing. In particular, this interference is conspicuous when the image changes smoothly.

For this reason, line correlation is detected by the line correlation detector 9, and the foldover noise is suppressed by using an output from the linear comb filter 6 when correlation exists, that is, when the image is not abruptly changed in a vertical direction.

Line Correlation Detector

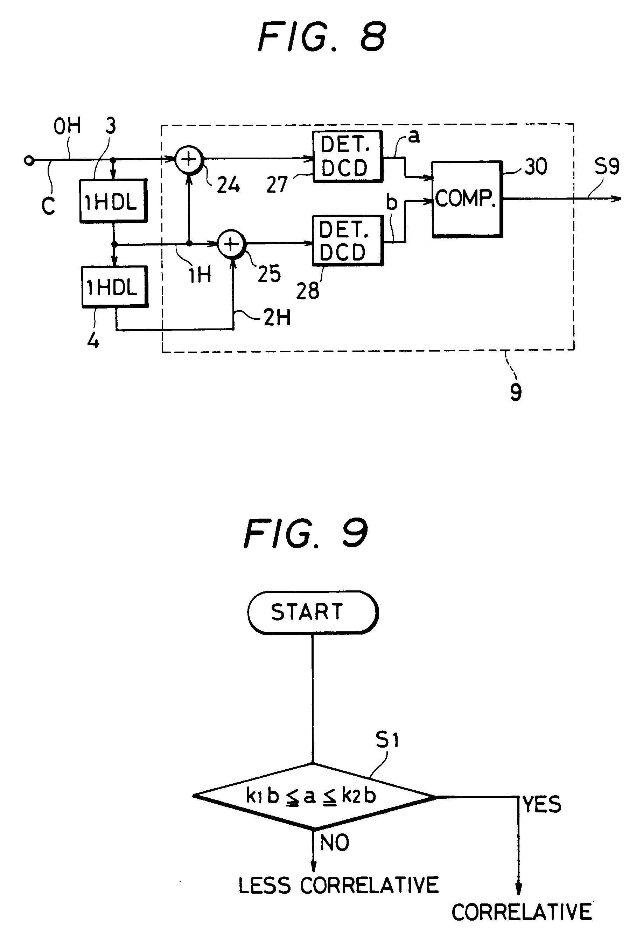

Figure 8 is a block diagram showing the principle of the line correlator 9. The chrominance signal C extracted by the high-pass filter 2 in Figure 1, and the three line signals 0H, 1H and 2H delayed by the 1H delay circuits 3 and 4 are supplied to adders 24 and 25.

A sum of the signals 0H and 1H is obtained by the adder 24. The sum is supplied to a detective decoder 27, and an output in proportion to a carrier amplitude of the sum of (n-1) and n lines can be obtained as follows:

$$a = |L_{n-1} + L_n| \quad (2)$$

Similarly, a signal representing the sum of n and (n+1) lines from the adder 25 through a detective decoder 28 is obtained as follows:

$$b = |L_n + L_{n+1}| \quad (3)$$

The outputs a and b from the decoders 27 and 28 are supplied to a comparator 30. In the comparator 30, processing in step S1 in Figure 9 is performed. More specifically, predetermined coefficients k1 (for example 0.9) and k2 (for example 1.1) are multiplied by b, and (k1b $\leqq$ a $\leqq$ k2b) is determined. If NO (a < k1b or a > k2b) in step S1, it is determined that the chrominance signal is abruptly changed, that is, 'less correlative'. If YES (k1b $\leqq$ a $\leqq$ k2b) in step S1, it is determined to be 'correlative'.

In Figure 8, an output from the comparator 30 serves as the output S9 for switching the two vertical comb filters 5 and 6 of Figure 1.

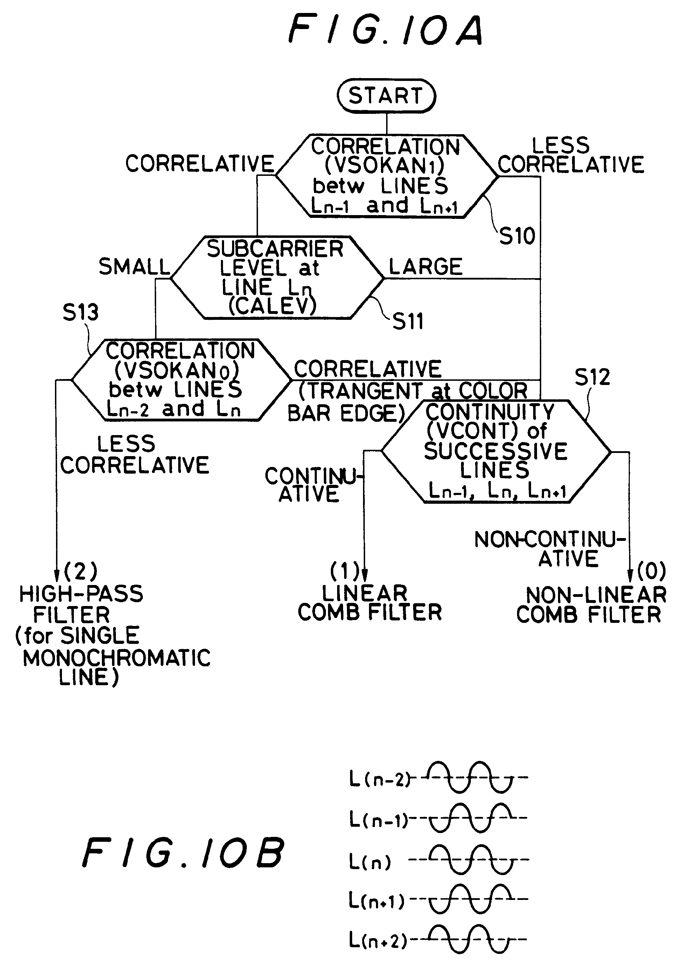

The line correlation detector 9 is arranged based on the principle of Figures 8 and 9. In practice, the presence/absence of correlation is determined based on an improved algorithm shown in Figure 10A. More specifically, as shown in Figure 10B, reference symbol $L_n$ denotes a current line; $L_{n-1}$ and $L_{n-2}$ first and second preceding lines; and $L_{n+1}$ and $L_{n+2}$ first and second succeeding lines. In step S10, a correlation value VSOKAN₁ between the lines $L_{n-1}$ and $L_{n+1}$ detected. The equation of correlation is:

$$VSOKEN_1 = \frac{LPF1 (ABS(L_{n+1} - L_{n-1}))}{LPF2 (ABS(L_{n+1}))} \quad (4)$$

The numerator represents the difference between the line signals, and the denominator is a term for standardizing a carrier level. Note that a reference symbol ABS denotes an absolute value. Low-pass filters LPF1 and LPF2 are included in an output stage of the correlation detector. Each of the low-pass filters is formed by a non-recursive digital filter having the following response:

$$H_{LPF1}(Z) = (1/4) (1 + 2Z^{-1} + Z^{-2}) \quad (5)$$
$$H_{LPF2}(Z) = (1/4) (1 + 2Z^{-1} + Z^{-2}) .$$
$$(1/4) (1 + 2Z^{-2} + Z^{-4}) \quad (6)$$

where $Z^{-1}$, $Z^{-2}$, ... are delays for each sampling interval of quantization.

In step S10, the magnitude of the correlation value VSOKAN₁ is determined by comparing the correlation value with a reference level. If the correlation value VSOKAN₁ is larger than the reference level, it is determined to be 'less correlative'. If the value VSOKAN₁ is smaller than the reference level, it is determined to be 'correlative'.

If 'less correlative' in step S10, continuity of the successive lines $L_{n-1}$, $L_n$ and $L_{n+1}$ is determined in step S12. A discriminant is:

$$VCONT = \frac{LPF2 (ABS(L_{n-1} + L_n))}{LPF2 (ABS(L_n + L_{n+1}))} \quad (7)$$

More specially, the continuity VCONT is calculated as a ratio of a sum of the lines $L_n$ and $L_{n+1}$. If the value VCONT is near '1', it is determined to be 'continuative'. If the value VCONT is sufficiently smaller or larger than '1', it is determined to be 'con-continuative' Note that the processing in step S12 corresponds to operations in the adders 24 and 25, the decoders 27 and 28, and the comparator 30 which are shown in Figure 8.

Step 12 results in 'non-continuative' when it is determined that the current line is not correlated with the first preceding line. In Figure 1, a contact 7-0 of the switch 7 is selected in response to the output S9 from the vertical correlation detector 9 to select an output from the non-linear vertical comb filter 5. Therefore, non-linear filter processing without colour smear can be performed when the chrominance signal is abruptly changed.

If 'correlative' in step S10, a colour omission of the current line $L_n$ is detected in the succeeding step S11. More specially, a subcarrier level is obtained:

$$CALEV = LPF2(ABS(L_n)) \quad (8)$$

If the level CALEV is higher than a predetermined level, continuity between the three lines will be determined in step S12, as described above.

If 'continuative', it is determined that the current line is correlative, and a contact 7-1 of the switch 7 is selected to select an output from the linear vertical comb filter 6 in Figure 1. Therefore, linear filter processing free from an interference due to foldover can be performed when the line correlation exists.

If the carrier level of the line $L_n$ is smaller than the predetermined value in step S11, the colour omission may often be caused in a single line. Therefore, correlation between the lines $L_{n-2}$ and $L_n$ is operated in the succeeding step S13. A value obtained by delaying the correlation value VSOKEN₁ in step S10 by one horizontal period is used as the correlation value $VSOKEN_0$. If the correlation between the lines $L_{n-2}$ and $L_n$ does not exist, a contact 7-2 of the switch 7 is selected to select a current signal which has sequentially passed through the high-pass filter 2, the delay circuit 3 and the inverter 8 in Figure 1. Therefore, when the colour omission in a single line, that is, colour omission in a black or white horizontal line, occurs, a display operation can be performed without degradation due to an interference caused by the filters 5 and 6.

If 'correlative' in step S13, the colour omission by a signal trangent at a colour bar edge in, for example, a colour bar test pattern, may often be determined. Therefore, the flow returns to step S12, and the continuity of the three lines is determined. If 'less continuative' in step S12, an output from the non-linear comb filter 5 is selected because of an edge of a colour bar. Therefore, the colour smear can be eliminated.

This determination of line correlation shown in Figure 10A is performed every sampling period with respect to the input digital video signal, and the switch 7 is switched to select one of the contacts at intervals of a sampling clock along the single line. The vertical comb filters 5 and 6 also perform processing within every sampling period.

Non-Linear Horizontal Filter

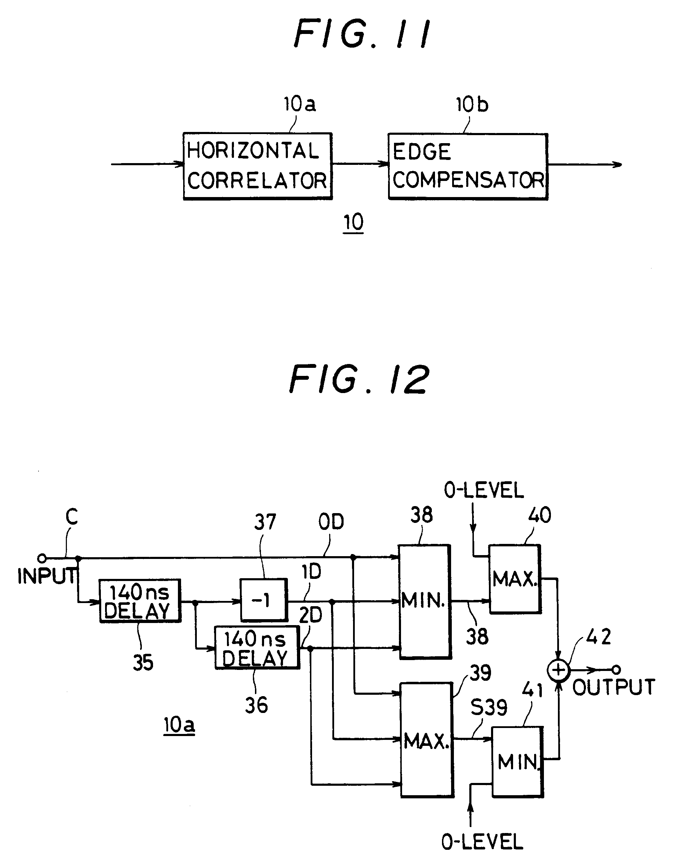

As described above, the non-linear horizontal filter 10 eliminates an interference component leaking from the non-linear or linear vertical comb filter 5 and 6 and appearing as oblique fringes (cross-colour pattern). Figure 11 is a block diagram showing an arrangement of the non-linear horizontal filter 10 formed by a horizontal correlator 10a and an edge compensator 10b.

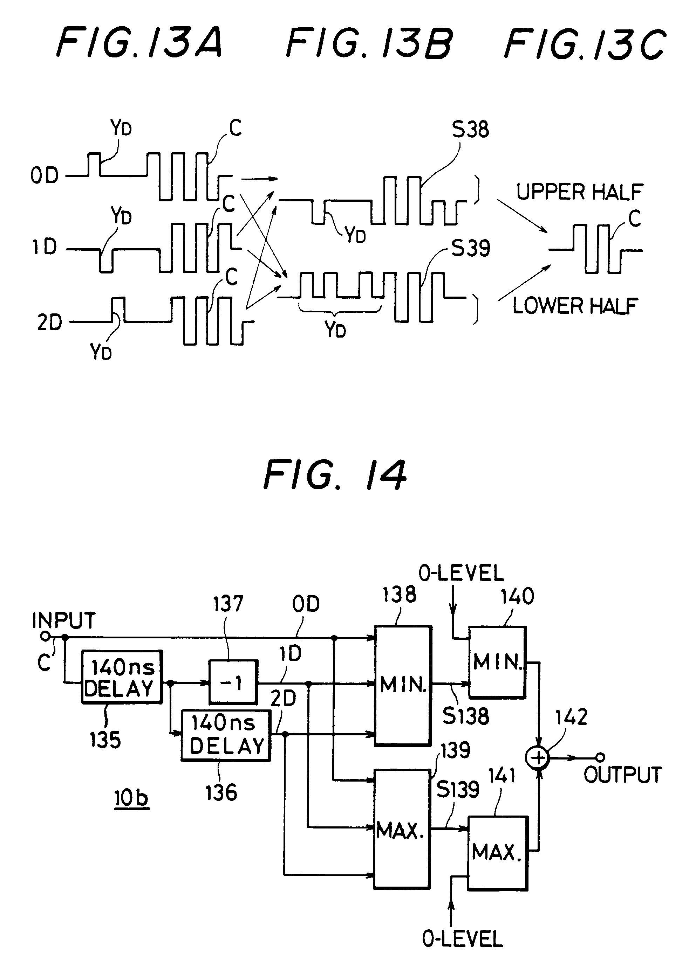

Figure 12 is a block diagram showing a known arrangement of the horizontal correlator 10a, and Figures 13A to 13C are waveform charts for explaining an operation of the horizontal correlator 10a. As shown in Figure 13A, in-phase signals 0D, 1D and 2D are formed. These signals are obtained by shifting their sub-carriers with respect to the input chrominance signal C by each half period through 140 ns delay circuits 35 and 36, and an inverter 37. These signals are supplied to minimum and maximum value circuits 38 and 39 to form outputs S38 and S39 respectively including upper and lower half waves of the chrominance signal as normal signals, as shown in Figure 13B. Negative and positive polarity high frequency luminance components YD having the different phases are mixed with these outputs S38 and S39, respectively.

Outputs from the minimum and maximum value circuits 38 and 39 are supplied to maximum and minimum value circuits 40 and 41, respectively, and the outputs are compared with '0' level (pedestal). Therefore, the upper and lower half waves are extracted from the circuits, respectively. Since the high frequency luminance components YD are eliminated from the extracted half waves, these half waves are composited by an adder 42 to form a separated chrominance signal as shown in Figure 13C.

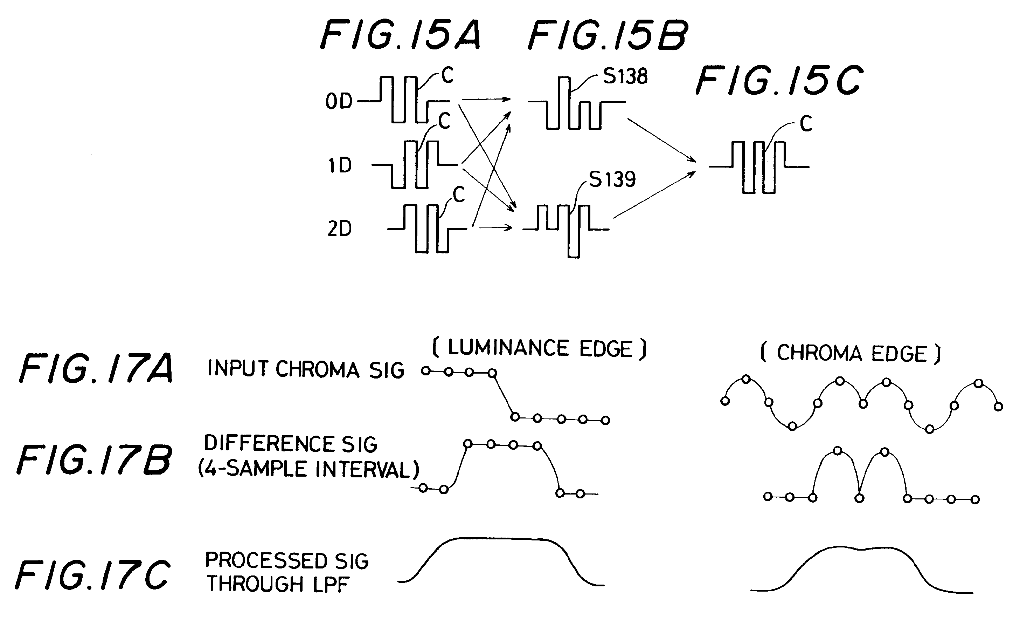

Thus, a cross-colour interference component leaking through the vertical comb filters 5 and 6 in the former stage can be eliminated. However, as shown in Figure 13C, one wave edge of the chrominance signal is damaged. Therefore, this damaged edge is compensated by the succeeding edge compensator 10b. As shown in Figure 14, the edge compensator 10b can be realized by replacing the maximum value circuit 40 with the minimum value circuit 41 in the horizontal correlator 10a in Figure 12. More specifically, a signal C shown in Figure 13C serving as an output signal from the horizontal correlator 10a shown in Figure 12 is supplied to the input terminal of the edge compensator 10b shown in Figure 14. As shown in Figure 14, the signal C is supplied to minimum and maximum value circuits 138 and 139, and a delay circuit 135 for delaying a half period of the sub-carrier. An output from the delay circuit 135 is supplied to an inverter 137 and another delay circuit 136. The delay circuit 136 is identical with the delay circuit 135. Outputs from the inverter 137 and the delay circuit 136 are supplied to the minimum and maximum value circuits 138 and 139, respectively, and a signal shown in Figure 15B can be obtained as output signals S138 and S139 respectively from the circuits 138 and 139. The output signals S138 and S139 are respectively supplied to minimum and maximum value circuits 140 and 141, and are compared with '0' level in each circuit. Therefore, of the signal components S138, a component whose level is '0' or less is supplied from the minimum value circuit 140. Of the signal components S139, a component whose level is '0' or more is supplied from the maximum value circuit 141. When these outputs are added to each other by an adder 142, a signal C shown in Figure 15C can be obtained. The signal C is processed so that the high frequency luminance signal components YD are eliminated from the signal shown in Figure 13A, with edges free from wave drop-outs.

The above cross-colour elimination performed by the horizontal correlator 10a is non-linear processing. Therefore, as described above, in accordance with a detection result of the horizontal correlation detector 12 in Figure 1, the non-linear and linear horizontal filter 10 and 11 are selectively used to complement each other.

Horizontal Correlation Detector

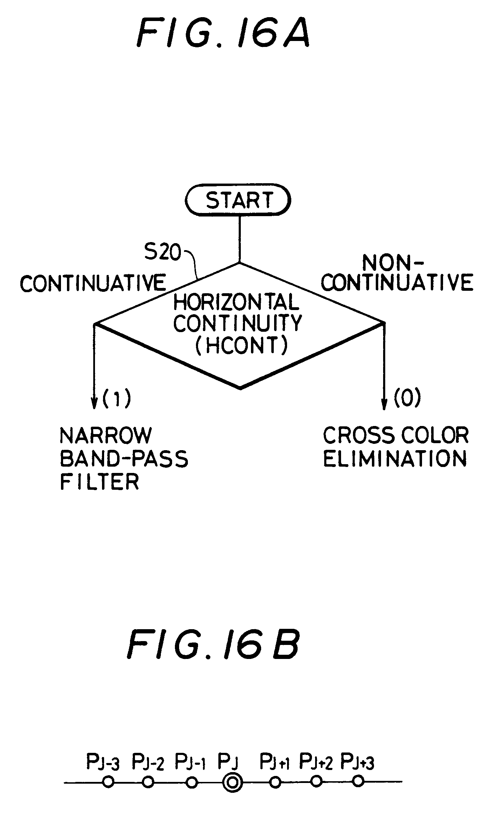

The horizontal correlation detector 12 can employ an arrangement similar to that in Figure 8, and can include a delay circuit group for each sampling period, a detective decoder, and a level comparator. A processing algorithm of the horizontal correlation detector 12 is shown in Figures 16A and 16B.

As shown in Figure 16A, to determine horizontal chrominance continuity in step S20, chrominance sampling values, ..., $P_{J-3}$, $P_{J-2}$, $P_{J-1}$, $P_J$, $P_{J+1}$, $P_{J+2}$, $P_{J+3}$, ..., of the preceding and succeeding successive sampling points of a determination point in figure 16B are referred to. The point $P_J$ is the determination point, and shifts along a horizontal direction at a period of a sampling clock.

In principle, a change ratio at the preceding and succeeding points to the point $P_J$ may be checked in the same manner as the processing (equation (7)) in step S12 in Figure 10. However, as shown in Figures 17A to 17C, not only a luminance edge but also a chrominance edge must be detected as a horizontal non-continuative point. The luminance edge is detected to eliminate the cross-colour, and the chrominance edge is detected to decrease a dot interference at the chrominance edge. Therefore, both the luminance and chrominance edges are detected with respect to the input chrominance signal shown in Figure 17A, in accordance with a difference between the four points spaced apart from each other, as shown in Figure 17B. Note that the sampling frequency with respect to the video signal in this case is set four times ($4f_{sc}$) the sub-carrier frequency.

A determination equation of continuity in step S20 in Figure 16A is:

$$HCONT = \frac{LPF2\,(ABS(P_{J+1} - P_{J+5}))}{LPF2\,(ABS(P_{J-5} - P_{J-1}))} \quad (9)$$

More specially, a ratio of a difference between the first succeeding point and the fifth succeeding point to the fifth preceding point and the first preceding point of the target point $P_J$ is calculated to determine continuity. A response of the low-pass filter LPF2 is the same as that in the equation (6) in the vertical system. The low-pass filter LPF2 is formed by the non-recursive digital filter:

$$H_{LPF2}(Z) = (1/4)\,(1 + 2Z^{-1} + Z^{-2}) .$$
$$(1/4)\,(1 + 2Z^{-2} + Z^{-4}) \quad (10)$$

Responses of the numerator and the denominator in the equation (9) are delayed by the low-pass filter LPF2 to some extent, as shown in Figure 17C. In the equation (9), in consideration of the delay, the edge is detected on the basis of points shifted by one-dot to exclude the target point $P_J$.

In step S20, it is determined to be 'continuative' if the value HCONT in the equation (9) is near to '1', and it is determined to be 'non-continuative' if the value HCONT is sufficiently smaller or larger than '1'. If 'non-continuative' in step S20, the switch 13 is connected to a contact 13-0 in response to an output S12 from the horizontal correlation detector 12 in Figure 1, to select an output from the non-linear horizontal filter 10.

If 'continuative' in step S20, the switch 13 is connected to a contact 13-1 in response to the output S12 to select the linear horizontal filter 11. The linear horizontal filter 11 is formed by a narrow band-pass filter.

If the cross-colour can be disregarded, that is cost performance is a problem, the linear and non-linear horizontal filters can be omitted. When a PAL video signal is used, a 2H delay circuit must be used in place of the 1H delay circuit, and the arrangement is more complicated. Therefore, the linear and non-linear vertical comb filters can be omitted.

Thus, as described, the non-linear and linear vertical comb filters are selectively used to complement each other in accordance with the presence/absence of vertical correlation. Therefore, foldover noise of harmonic distortion caused by non-linear digital processing is not conspicuous when an image is gradually changed. In addition, colour smear caused by linear comb filter processing does not occur when the image is changed abruptly. In this way, a high-performance luminance and chrominance signal separator having a practical size and speed can be realized.

Also, a cross-colour component leaking in vertical comb filter processing can be eliminated by a non-linear horizontal filter. In addition, the non-linear and linear horizontal filters are selectively used to complement each other, so that distortion caused by the non-linear processing is not conspicuous when the image is gradually changed in a horizontal direction. Therefore, high-precision separate operation without signal degradation can be performed in the horizontal direction.

## Claims

1.   Apparatus for separating a luminance and a chrominance signal from a digital composite video signal, the apparatus comprising:
     filter means (2) for extracting a chrominance signal including a high frequency component of a luminance signal;
     a non-linear vertical comb filter (5) to which three successive horizontal line signals of the chrominance signal are applied for generating a chrominance signal without colour smear;
     a linear vertical comb filter (6) to which the three successive horizontal line signals of the chrominance signal are applied for generating a chrominance signal without aliasing noise; and
     a correlation detection circuit (9) for detecting correlation between the three successive horizontal line signals and for controlling a selection of one of the outputs of said linear and non-linear vertical comb filters (6, 5) in response to the result of said detection;

said non-linear vertical comb filter (5) being selectively used when the correlation does not exist, and said linear vertical comb filter (6) being selectively used when the correlation exists.

2. Apparatus according to claim 1 further including a subtractor means (15) for subtracting the chrominance signal output from one of said linear and non-linear vertical comb filters (6, 5) from the digital composite video signal so as to obtain the luminance signal.

3. Apparatus according to claim 2 wherein said filter means (2) is a high-pass filter (2).

4. Apparatus according to claim 2 wherein said filter means (2) is a band-pass filter (2).

5. Apparatus for separating a luminance and chrominance signal from a digital composite video signal, the apparatus comprising:
   filter means (2) for extracting a chrominance signal including a high frequency component of a luminance signal;
   a non-linear horizontal filter (10) to which an output signal of said filter means (2) is applied for generating the chrominance signal without a cross-colour component;
   a linear horizontal filter (11) to which said output signal of said filter means (2) is applied for generating the chrominance signal without aliasing noise;
   a horizontal correlation detection circuit (12) for detecting correlation between successive picture elements on one horizontal line of said digital composite video signal;
   a switch means (13) to which output signals of said non-linear and linear horizontal filters (10, 11) are applied for selectively extracting one thereof in response to an output signal of said horizontal correlation detection circuit (12);
   a subtractor means (15) for subtracting the output signal of said switch means (13) from said digital composite video signal so as to obtain the luminance signal.

6. Apparatus according to claim 5 wherein said switch means (13) selects the output signal of said non-linear horizontal filter (10) when the horizontal correlation between the successive picture elements does not exist, and said switch means (13) selects the output signal of said linear horizontal filter (11) when the horizontal correlation exists.

7. Apparatus for separating a chrominance and luminance signal from a digital composite video signal, the apparatus comprising:

extracting means (2) for extracting a chrominance signal including a high frequency component of a luminance signal from the composite video signal;
producing means (3, 4) connected to said extracting means (2) for producing successive horizontal line signals;
a non-linear vertical comb filter (5) to which the successive horizontal line signals are applied for producing a chrominance signal without colour smear;
a linear vertical comb filter (6) to which said successive horizontal line signals are applied for producing a chrominance signal without aliasing noise;
first detecting means (12) connected to said extracting means (2) for detecting correlation between the successive horizontal line signals;
first selecting means (7) for selecting one of the output signals of said non-linear and linear vertical comb filters (5, 6) in response to an output signal of said first detecting means (12);
non-linear and linear horizontal filters (10, 11) connected to said first selecting means (7) for producing chrominance signals having no cross-colour component and no aliasing noise;
second detecting means (8) for detecting correlation between successive picture elements on one horizontal line signal of said composite video signal;
second selecting means (13) for selecting one of the output signals of said non-linear and linear horizontal filters (10, 11) in response to an output signal of said second detecting means (9); and
means (15) for subtracting an output signal of said second selecting means (13) so that the luminance signal is separated from the composite video signal.

8. Apparatus according to claim 7 wherein said extracting means (2) includes a high-pass filter (2).

9. Apparatus according to claim 7 wherein said extracting means (2) includes a band-pass filter (2).

10. Apparatus according to claim 7 wherein said producing means (3, 4) includes two delay circuits (3, 4), each of which has a delay time of one horizontal line period so that non-delayed, one horizontal period and two horizontal periods delayed signals are produced thereby.

11. Apparatus according to claim 8 wherein said first selecting means (7) selects the output signal of said non-linear vertical comb filter (5) when the vertical correlation does not exist between said successive horizontal line signals, and selects the output signal of said linear vertical comb filter (6) when the correlation exists.

12. Apparatus according to claim 11 wherein said second selecting means (13) selects the output signal of said non-linear horizontal filter (10) when the horizontal correlation does not exist, and selects the output signal of said linear horizontal filter (11) when the horizontal correlation exists.

13. Apparatus according to claim 12 further comprising an inverter circuit (8) connected between said producing means (3,4) and said first selecting means (7), said first selecting means (7) selecting an output signal of said inverter circuit (8) when the vertical correlation between non-delayed and two horizontal period delayed signals does not exist.

**Patentansprüche**

1. Vorrichtung zur Abtrennung eines Luminanzsignals und eines Chrominanzsignals aus einem digitalen Video-Signalgemisch, wobei die Vorrichtung umfaßt:
eine Filtereinrichtung (2) zum Abtrennen eines Chrominanzsignals, das eine Hochfrequenzkomponente eines Luminanzsignals einschließt,
ein nichtlineares Vertikal-Kammfilter (5), dem drei aufeinanderfolgende Horizontalzeilensignale des Chrominanzsignals zur Erzeugung eines Chrominanzsignals ohne Farbfahne zugeführt werden,
ein lineares Vertikal-Kammfilter (6), dem die drei aufeinanderfolgenden Horizontalzeilensignale des Chrominanzsignals zur Erzeugung eines Chrominanzsignals ohne Umfaltrauschen zugeführt werden und
eine Korrelations-Detektorschaltung (9) zum Detektieren einer Korrelation zwischen den drei aufeinanderfolgenden Horizontalzeilensignalen und zum vom Ergebnis dieser Detektion abhängigen Steuern einer Auswahl eines der Ausgangssignale dieser linearen und nichtlinearen Vertikal-Kammfilter (6,5), wobei das nichtlineare Vertikal-Kammfilter (5) wahlweise benutzt wird, wenn keine Korrelation vorliegt, und das lineare Vertikal-Kammfilter (6) wahlweise benutzt wird, wenn Korrelation vorliegt.

2. Vorrichtung nach Anspruch 1,
die zusätzlich eine Subtraktionseinrichtung (15) zum Subtrahieren des Chrominanz-Ausgangssignals des linearen oder des nichtlinearen Vertikal-Kammfilters (6,5) vom digitalen Video-Signalgemisch umfaßt, um das Luminanzsignal zu erhalten.

3. Vorrichtung nach Anspruch 2,
wobei die Filtereinrichtung (2) ein Hochpaßfilter (2) ist.

4. Vorrichtung nach Anspruch 2,
wobei die Filtereinrichtung (2) ein Bandpaßfilter (2) ist.

5. Vorrichtung zum Abtrennen eines Luminanzsignals und eines Chrominanzsignals von einem digitalen Video-Signalgemisch, wobei die Vorrichtung umfaßt:
eine Filtereinrichtung (2) zum Abtrennen eines Chrominanzsignals, das eine Hochfrequenzkomponente eines Luminanzsignals einschließt,
ein nichtlineares Horizontal-Filter (10), dem ein Ausgangssignal der Filtereimichtung (2) zugeführt wird, um das Chrominanzsignal ohne Komponente eines Farbübersprechens zu erzeugen,
ein lineares Horizontal-Filter (11), dem das Ausgangssignal der Filtereinrichtung (2) zugeführt wird, um das Chrominanzsignal frei von Umfaltrauschen zu erzeugen,
eine Horizontal-Korrelationsdetektorschaltung (12) zum Detektieren einer Korrelation zwischen aufeinanderfolgenden Bildelementen auf einer horizontalen Zeile des digitalen Video-Signalgemisches,
eine Schaltereinrichtung (13), der Ausgangssignale dieses nichtlinearen und dieses linearen Horizontal-Filters (10,11) zugeführt werden, um wahlweise eines derselben abhängig von einem Ausgangssignal der Horizontal-Korrelationsdetektorschaltung (12) abzutrennen, (und)
eine Subtraktionseinrichtung (15) zum Subtrahieren des Ausgangssignals dieser Schaltereinrichtung von diesem digitalen Video-Signalgemisch, um das Luminanzsignal zu erhalten.

6. Vorrichtung nach Anspruch 5,
wobei diese Schaltereinrichtung (13) das Ausgangssignal dieses nichtlinearen Horizontal-Filters (10) dann auswählt, wenn horizontale Korrelation zwischen den aufeinanderfolgenden Bildelementen nicht vorliegt, und diese Schaltereinrichtung (13) dann das Ausgangssignal dieses linearen Horizontal-Filters (11) auswählt, wenn horizontale Korrelation vorliegt.

7. Vorrichtung zum Abtrennen eines Chrominanzsignals und eines Luminanzsignals von einem digitalen Video-Signalgemisch, wobei die Vorrichtung umfaßt:
eine Abtrenneinrichtung (2) zum Abtrennen eines Chrominanzsignals, das eine Hochfrequenzkomponente eines Luminanzsignals einschließt, von dem Video-Signalgemisch,
eine Einrichtung (3,4) zum Erzeugen aufeinanderfolgender Horizontalzeilensignale, wobei diese Einrichtung (3,4) mit der Abtrenneinrichtung (2) verbunden ist,

ein nichtlineares Vertikal-Kammfilter (5), dem die aufeinanderfolgenden Horizontalzeilensignale zugeführt werden, um ein Chrominanzsignal ohne Farbfahne zu erzeugen,

ein lineares Vertikal-Kammfilter (6), dem diese aufeinanderfolgenden Horizontalzeilensignale zugeführt werden, um ein von Umfaltrauschen freies Chrominanzsignal zu erzeugen,

eine erste Detektoreinrichtung (12), die mit dieser Abtrenneinrichtung (2) verbunden ist, um Korrelation zwischen den aufeinanderfolgenden Horizontalzeilensignalen zu detektieren,

eine erste Auwahleinrichtung (7) zur Auswahl eines der Ausgangssignale dieses nichtlinearen und dieses linearen Vertikal-Kammfilters (5,6), dies in Abhängigkeit von einem Ausgangssignal der ersten Detektoreinrichtung (12),

nichtlineare und lineare Horizontal-Filter (10,11), die mit der ersten Auswahleinrichtung (7) verbunden sind, um Chrominanzsignale zu erzeugen, die keine Komponente eines Farbübersprechens und keine Komponente eines Umfaltrauschens haben,

eine zweite Detektoreinrichtung (8), zur Detektion von Korrelation zwischen aufeinanderfolgenden Bildelementen eines einzelnen Horizontalzeilensignals des Video-Signalgemisches,

eine zweite Auswahleinrichtung (13) zur Auswahl eines der Ausgangssignale dieser nichtlinearen und linearen Horizontal-Filter (10,11) in Abhängigkeit vom Ausgangssignal dieser zweiten Detektoreinrichtung (9) und

eine Einrichtung zur Subtraktion eines Ausgangssignals der zweiten Auswahleinrichtung (13), damit das Luminanzsignal vom Video-Signalgemisch abgetrennt ist.

8. Vorrichtung nach Anspruch 7,
wobei diese Abtrenneinrichtung (12) ein Hochpaßfilter (2) einschließt.

9. Vorrichtung nach Anspruch 7,
wobei diese Abtrenneinrichtung (2) ein Bandpaßfilter (2) einschließt.

10. Vorrichtung nach Anspruch 7,
wobei diese Einrichtung (3,4) zum Erzeugen aufeinanderfolgender horizontaler Zeilensignale zwei Verzögerungsschaltungen (3,4) umfaßt, von denen eine jede eine Verzögerungszeit von der Dauer einer horizontalen Zeilenperiode hat, so daß dadurch ein nicht verzögertes, ein um eine Zeilenperiode und ein um zwei Zeilenperioden verzögertes Signal erzeugt sind.

11. Vorrichtung nach Anspruch 8,
wobei die erste Auswahleinrichtung (7) das Ausgangssignal des nichtlinearen Vertikal-Kammfilters (5) dann auswählt, wenn keine vertikale Korrelation zwischen den aufeinanderfolgenden Horizontalzeilensignalen vorliegt, und das Ausgangssignal dieses linearen Vertikal-Kammfilters (6) auswählt, wenn Korrelation herrscht.

12. Vorrichtung nach Anspruch 11,
wobei diese zweite Auswahleinrichtung (13) das Ausgangssignal des nichtlinearen Horizontal-Filters (10) dann auswählt, wenn keine horizontale Korrelation vorliegt, und das Ausgangssignal dieses linearen Horizontal-Fifters (11) auswählt, wenn horizontale Korrelation herrscht.

13. Vorrichtung nach Anspruch 12,
mit zusätzlich einer Inverterschaltung (8), die eingefügt ist zwischen dieser Erzeugungseinrichtung (3,4) und der ersten Auswahleinrichtung (7), wobei diese erste Auswahleinrichtung (7) ein Ausgangssignal der Inverterschaltung (8) dann auswählt, wenn keine vertikale Korrelation zwischen nicht verzögerten und zwei Zeilenperioden verzögerten Signalen vorliegt.

**Revendications**

1. Dispositif pour séparer un signal de luminance et un signal de chrominance d'un signal vidéo composite numérique, le dispositif comprenant:
   - des moyens de filtrage (2) pour extraire le signal de chrominance comprenant une fréquence élevée du signal de luminance;
   - un filtre en peigne vertical non linéaire (5) auquel trois signaux de lignes horizontales successives du signal de chrominance sont appliqués pour produire un signal de chrominance dans flou du bord des plages colorées;
   - un filtre en peigne vertical linéaire (6) auquel les trois signaux de lignes horizontales successives du signal de chrominance sont appliqués pour produire un signal de chrominance sans repliement du spectre; et
   - un circuit de détection de corrélation (9) pour détecter une corrélation entre les trois signaux de lignes horizontales successives et pour commander la sélection de l'un des signaux de sortie desdits filtres en peigne verticaux linéaire et non linéaire (6, 5) en réponse au résultat de ladite détection,

        ledit filtre en peigne vertical non linéaire (5) étant utilisé sélectivement lorsqu'il n'y a pas de corrélation, et ledit filtre en peigne vertical linéaire (6) étant utilisé sélectivement lorsqu'il y a une corrélation.

2. Dispositif selon la revendication 1, comprenant en outre des moyens de soustraction (15) pour soustraire le signal de chrominance de sortie de l'un desdits filtres en peigne verticaux linéaire et non linéaire (6, 5) provenant du signal vidéo composite numérique pour obtenir le signal de luminance.

3. Dispositif selon la revendication 2, dans lequel lesdits moyens de filtrage (2) sont un filtre passe-haut (2).

4. Dispositif selon la revendication 2, dans lequel lesdits moyens de filtrage 2 sont un filtre passe-bande (2).

5. Dispositif pour séparer un signal de luminance et un signal de chrominance d'un signal vidéo composite numérique, le dispositif comprenant:
   - des moyens de filtrage (2) pour extraire le signal de chrominance comprenant une composante à fréquence élevée du signal de luminance;
   - un filtre horizontal non linéaire (10) auquel le signal de sortie desdits moyens de filtrage (2) est appliqué pour produire le signal de chrominance sans composante de diaphotie de chrominance;
   - un filtre horizontal linéaire (11) auquel ledit signal de sortie desdits moyens de filtrage (2) est appliqué pour produire le signal de chrominance sans bruit de repliement du spectre;
   - un circuit de détection de corrélation horizontale (12) pour détecter une corrélation entre des éléments d'image successifs sur une ligne horizontale dudit signal vidéo composite numérique;
   - des moyens de commutation (13) auxquels les signaux de sortie desdits filtres horizontaux non linéaire et linéaire (10, 11) sont appliqués pour extraire sélectivement un de ceux-ci en réponse au signal de sortie dudit circuit de détection de corrélation horizontale (12);
   - des moyens de soustraction (15) pour soustraire le signal de sortie desdits moyens de commutation (3) dudit signal vidéo composite numérique pour obtenir le signal de luminance.

6. Dispositif selon la revendication 5, dans lequel lesdits moyens de commutation (13) sélectionnent le signal de sortie dudit filtre horizontal non linéaire (10) lorsqu'il n'y a pas de corrélation horizontale entre les éléments d'image successifs, et lesdits moyens de commutation (13) sélectionnent le signal de sortie dudit filtre horizontal linéaire (11) lorsqu'il y a corrélation horizontale.

7. Dispositif pour séparer un signal de chrominance et un signal de luminance d'un signal vidéo composite numérique, le dispositif comprenant:
   - des moyens d'extraction (2) pour extraire le signal de chrominance comprenant une composante à fréquence élevée du signal de luminance du signal vidéo composite;
   - des moyens de production (3, 4) connectés auxdits moyens d'extraction (2) pour produire des signaux de lignes horizontales successives;
   - un filtre en peigne vertical non linéaire (5) auquel les signaux de lignes horizontales successives sont appliqués pour produire un signal de chrominance sans flou du bord des plages colorées;
   - un filtre en peigne vertical linéaire (6) auquel les signaux de lignes horizontales successives sont appliqués pour produire un signal de chrominance sans bruit de repliement du spectre;
   - des premiers moyens de détection (12) connectés auxdits moyens d'extraction (2) pour détecter une corrélation entre les signaux de lignes horizontales successives;
   - des premiers moyens de sélection (7) pour sélectionner un des signaux de sortie desdits filtres en peigne verticaux non linéaire et linéaire en réponse au signal de sortie desdits premiers moyens de détection (12);
   - des filtres horizontaux non linéaire et linéaire (10, 11) connectés auxdits premiers moyens de sélection (7) pour produire des signaux de chrominance n'ayant pas de composante de diaphotie de chrominance ni de bruit de repliement du spectre;
   - des deuxièmes moyens de détection (8) pour détecter une corrélation entre des éléments d'image successifs dans un signal de ligne horizontale dudit signal vidéo composite numérique;
   - des deuxièmes moyens de sélection (13) pour sélectionner un des signaux de sortie desdits filtres horizontaux non linéaire et linéaire (10, 11) en réponse au signal de sortie desdits deuxièmes moyens de détection (9); et
   - des moyens (15) pour soustraire le signal de sortie desdits deuxièmes moyens de sélection (13) de manière que le signal de luminance soit séparé du signal vidéo composite.

8. Dispositif selon la revendication 7, dans lequel lesdits moyens d'extraction (2) comprennent un filtre passe-haut (2).

9. Dispositif selon la revendication 7, dans lequel lesdits moyens d'extraction (2) comprennent un filtre passe-bande (2).

10. Dispositif selon la revendication 7, dans lequel lesdits moyens de production (3, 4) comprennent deux circuits à retard (3, 4) dont chacun a un temps de retard d'une période de ligne horizontale de manière que des signaux non retardé, retardé d'une période horizontale et retardé de deux périodes horizontales soient produits par ceux-ci.

11. Dispositif selon la revendication 8, dans lequel lesdits premiers moyens de sélection (7) sélectionnent le signal de sortie dudit filtre en peigne vertical non linéaire (5) lorsqu'il n'y a pas de corrélation verticale entre lesdits signaux de lignes horizontales successives, et sélectionnent le signal de sortie dudit filtre en peigne vertical linéaire (6) lorsqu'il y a une corrélation verticale.

12. Dispositif selon la revendication 11, dans lequel lesdits deuxièmes moyens de sélection (13) sélectionnent le signal de sortie dudit filtre horizontal non linéaire (10) lorsqu'il n'y a pas de corrélation horizontale, et sélectionnent le signal de sortie dudit filtre horizontal linéaire (11) lorsqu'il y a une corrélation horizontale.

13. Dispositif selon la revendication 12, comprenant en outre un circuit inverseur (8) monté entre lesdtis moyens de production (3,4) et lesdits premiers moyens de sélection (7), lesdits premiers moyens de sélection (7) sélectionnant un signal de sortie dudit circuit inverseur (8) lorsqu'il n'y a pas de correlation verticale entre le signal non retardé et le signal retardé de deux périodes horizontales.

FIG. 1

DIGITAL COMPOSITE VIDEO INPUT SIG.

# FIG.2A FIG.2B FIG.2C

# FIG. 3

FIG. 4A

FIG. 4B

FIG. 4C

FIG. 5A

FIG. 5B

FIG. 5C

EP 0 358 453 B1

# FIG.6A  FIG.6B  FIG.6C

# FIG.7A  FIG.7B  FIG.7C  FIG.7D

# FIG. 8

# FIG. 9

# F I G. 10 A

START

CORRELATION (VSOKAN1) betw LINES Ln-1 and Ln+1 — S10

CORRELATIVE ← → LESS CORRELATIVE

SUBCARRIER LEVEL at LINE Ln (CALEV) — S11

SMALL ← → LARGE

S13

CORRELATION (VSOKAN0) betw LINES Ln-2 and Ln — CORRELATIVE (TRANGENT at COLOR BAR EDGE)

LESS CORRELATIVE

S12

CONTINUITY (VCONT) of SUCCESSIVE LINES Ln-1, Ln, Ln+1

CONTINU-ATIVE

NON-CONTINU-ATIVE

(2) HIGH-PASS FILTER (for SINGLE MONOCHROMATIC LINE)

(1) LINEAR COMB FILTER

(0) NON-LINEAR COMB FILTER

# F I G. 10 B

L(n-2)
L(n-1)
L(n)
L(n+1)
L(n+2)

# FIG. 11

HORIZONTAL CORRELATOR
10a

EDGE COMPENSATOR
10b

10

# FIG. 12

0-LEVEL

C
37   0D
38   40

INPUT

140 ns DELAY
35

−1

140 ns DELAY
36

1D

2D

MIN.

MAX.

38

42

OUTPUT

39

MAX.

S39

41

MIN.

0-LEVEL

10a

# FIG.13A    FIG.13B    FIG.13C

# FIG. 14

## FIG.15A   FIG.15B   FIG.15C

## FIG.17A
INPUT CHROMA SIG

(LUMINANCE EDGE)   (CHROMA EDGE)

## FIG.17B
DIFFERENCE SIG
(4-SAMPLE INTERVAL)

## FIG.17C
PROCESSED SIG
THROUGH LPF

EP 0 358 453 B1

# FIG. 16A

START

S20

CONTINUATIVE

NON-CONTINUATIVE

HORIZONTAL
CONTINUITY
(HCONT)

↓(1)

NARROW
BAND-PASS
FILTER

↓(0)

CROSS COLOR
ELIMINATION

# FIG. 16B

$P_{J-3}$  $P_{J-2}$  $P_{J-1}$  $P_J$  $P_{J+1}$  $P_{J+2}$  $P_{J+3}$